(19) Europäisches Patentamt / European Patent Office / Office européen des brevets

(11) **EP 4 503 664 A1**

(12) **EUROPEAN PATENT APPLICATION**
published in accordance with Art. 153(4) EPC

(43) Date of publication:
**05.02.2025 Bulletin 2025/06**

(21) Application number: **23826200.0**

(22) Date of filing: **13.06.2023**

(51) International Patent Classification (IPC):
**H04W 4/029** (2018.01)   **G05D 1/00** (2024.01)

(52) Cooperative Patent Classification (CPC):
**G05D 1/00; H04W 4/029; H04W 4/40**

(86) International application number:
**PCT/CN2023/099778**

(87) International publication number:
**WO 2023/246551 (28.12.2023 Gazette 2023/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.06.2022  CN 202210725770**

(71) Applicant: **ZTE Corporation**
**Shenzhen, Guangdong  518057 (CN)**

(72) Inventors:
• **XIA, Shuqiang**
**Shenzhen, Guangdong 518057 (CN)**

• **LIU, Fan**
**Shenzhen, Guangdong 518057 (CN)**
• **MENG, Xiao**
**Shenzhen, Guangdong 518057 (CN)**
• **YUAN, Weijie**
**Shenzhen, Guangdong 518057 (CN)**
• **YANG, Li**
**Shenzhen, Guangdong 518057 (CN)**
• **HAN, Zhiqiang**
**Shenzhen, Guangdong 518057 (CN)**

(74) Representative: **Aipex B.V.**
**Vestdijk 51**
**5611 CA Eindhoven (NL)**

(54) **VEHICLE TRACKING METHOD AND APPARATUS, COMMUNICATION UNIT, AND STORAGE MEDIUM**

(57)    The present application provides a vehicle tracking method and apparatus, a communication unit, and a storage medium. The method includes the following: A vehicle position in a curvilinear coordinate system at a moment corresponding to a target data frame is predicted according to state information of a historical data frame; a beamforming vector is determined according to the vehicle position; a beam is sent based on the beamforming vector, and an echo is received; and state information of the target data frame is determined based on an extended Kalman filtering algorithm and a measurement parameter of the echo, where the state information of the target data frame includes the corrected vehicle position.

Predict, according to state information of a historical data frame , a vehicle position in a curvilinear coordinate system at a moment corresponding to a target data frame — 110

Determine a beamforming vector according to the vehicle position — 120

Send a beam based on the beamforming vector and receive an echo — 130

Determine state information of the target data frame based on an extended Kalman filtering algorithm and a measurement parameter of the echo , where the state information of the target data frame includes a corrected vehicle position — 140

**FIG. 2**

EP 4 503 664 A1

**Description**

TECHNICAL FIELD

The present application relates to the field of radio communication network technology, for example, a vehicle tracking method and apparatus, a communication unit, and a storage medium.

BACKGROUND

Strongly driven by the 5G's low delay (less than 100 milliseconds) and high positioning accuracy (centimeter level), technologies such as the Internet of Vehicles have burst out with new vitality. For example, factory logistics in the related art need transportation through third parties. However, third-party vehicles lack effective supervision and real-time tracking. As one of the important links of smart factories, smart logistics transportation, in combination with the 5G Internet of Vehicles technology, can implement refined and dynamic management of logistics trails, thereby effectively improving factory efficiency. The implementation of this object technically depends mainly on the communication and tracking between road side base stations and logistics vehicles.

The pursuit of larger bandwidth and higher speed drives sensing and communication to mix together and implement ultimate integration which becomes the mainstream trend. In this context, integrated sensing and communication (ISAC) emerges and has great potential to play a key role in the Internet of Vehicles communication, such as assisting in communication data transmission through sensing algorithms. However, for most of the sensing-assisted communication methods in the related art, it is assumed that a vehicle runs on a straight one-way street. At present, the beam tracking technology based on the integrated sensing and communication only conducts high-accuracy kinematics modeling for an integrated sensing and communication system in a linear motion. However, in an actual scenario, a target may move along a curved or irregular road. In this case, if tracking is still performed according to a motion model under a straight-line condition, severe model mismatching may be generated, thereby leading to a tracking failure.

SUMMARY

The present application provides a vehicle tracking method and apparatus, a communication unit, and a storage medium.

Embodiments of the present application provide a vehicle tracking method. The method includes the following.

A vehicle position in a curvilinear coordinate system (CCS) at a moment corresponding to a target data frame is predicted according to state information of a historical data frame.

A beamforming vector is determined according to the vehicle position.

A beam is sent based on the beamforming vector, and an echo is received.

State information of the target data frame is determined based on an extended Kalman filtering (EKF) algorithm and a measurement parameter of the echo, where the state information of the target data frame includes the corrected vehicle position.

Embodiments of the present application further provide a vehicle tracking apparatus. The apparatus includes a position prediction module, a vector determination module, a vehicle tracking module, and a state determination module.

The position prediction module is configured to predict, according to state information of a historical data frame, a vehicle position in a curvilinear coordinate system at a moment corresponding to a target data frame.

The vector determination module is configured to determine a beamforming vector according to the vehicle position.

The vehicle tracking module is configured to send a beam based on the beamforming vector and receive an echo.

The state determination module is configured to determine state information of the target data frame based on an extended Kalman filtering algorithm and a measurement parameter of the echo, where the state information of the target data frame includes the corrected vehicle position.

Embodiments of the present application further provide a communication node. The communication node includes a memory, a processor and a computer program stored in the memory and executable by the processor, where the processor, when executing the program, performs the preceding vehicle tracking method.

Embodiments of the present application further provide a computer-readable storage medium for storing a computer program, where when the program is executed by a processor, the preceding vehicle tracking method is performed.

BRIEF DESCRIPTION OF DRAWINGS

FIG. 1 is a relationship diagram of a Cartesian coordinate system and a curvilinear coordinate system.

FIG. 2 is a flowchart of a vehicle tracking method according to an embodiment.

FIG. 3 is a flowchart of a vehicle tracking method according to another embodiment.

FIG. 4 is a diagram illustrating coordinate conversion according to an embodiment.

FIG. 5 is a diagram illustrating a beam-based vehicle tracking process according to an embodiment.

FIG. 6 is a structural diagram of a vehicle tracking apparatus according to an embodiment.

FIG. 7 is a diagram illustrating the hardware structure of a communication unit according to an embodiment.

DETAILED DESCRIPTION

The present application is described hereinafter in conjunction with the drawings and embodiments. It is to be understood that the embodiments described herein are intended to explain the present application and not to limit the present application. It is to be noted that if not in collision, embodiments of the present application and features therein may be combined with each other in any manner. Additionally, it is to be noted that for ease of description, only part, not all, of structures related to the present application are illustrated in the drawings.

Embodiments of the present application provide a vehicle tracking method which predicts vehicle positions in a curvilinear coordinate system, tracks vehicles based on beams, and completes sensing-assisted communication in the curvilinear coordinate system. The method is applicable to the scenario of a rectilinear motion of a vehicle and can meet the tracking requirements of the vehicle movement in any shape such as a curved or irregular shape.

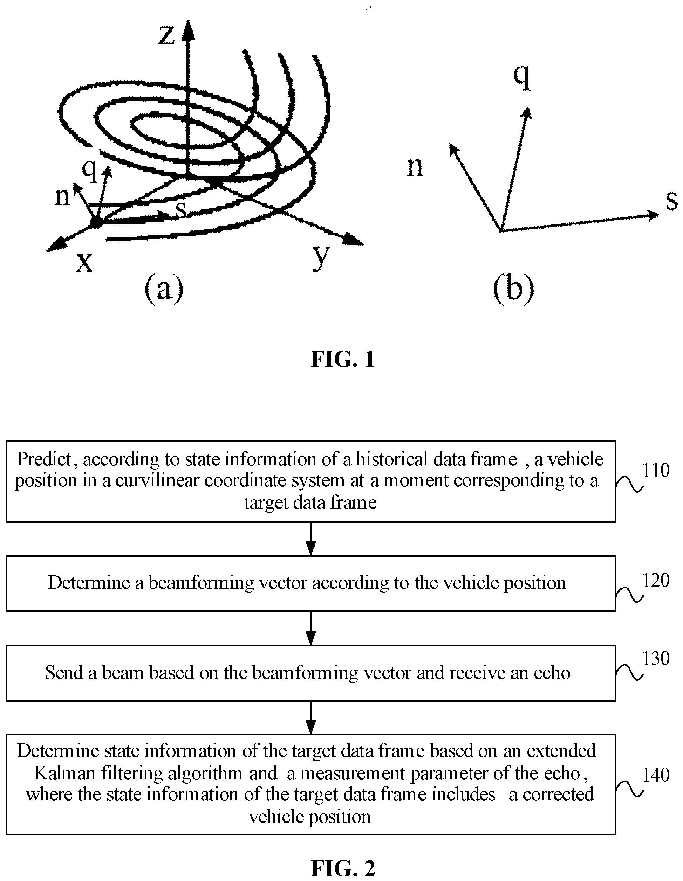

FIG. 1 is a relationship diagram of a Cartesian coordinate system and a curvilinear coordinate system. As shown in FIG. 1, FIG. 1(a) shows a road model in a three-dimensional Cartesian coordinate system. A point in the Cartesian coordinate system is decomposed in the axes of CCS in FIG. 1(b). When a vehicle runs on a road, the motion trail and motion speed of the vehicle may be decomposed, according to the shape of the road, into a component in the direction of a road marking and a component in a direction perpendicular to the direction of the road marking. These two directions can be denoted as the s direction and the n direction in FIG. 1. The height of the vehicle center point relative to the road surface is denoted as the q direction. These three directions are orthogonal to each other in the Cartesian coordinate system and thus may be expressed in the form of FIG. 1(b). The expression of a curve of the road marking in the Cartesian coordinate system in FIG. 1(a) may be determined in an interpolation fitting manner.

FIG. 2 is a flowchart of a vehicle tracking method according to an embodiment. The method may be applied to a communication unit, such as a road side unit (RSU). The communication unit is equivalent to an integration of a base station and radar. The communication unit has the function of transmitting downlink communication data to a vehicle and tracking the vehicle position through an electromagnetic wave. As shown in FIG. 2, the method in this embodiment includes the following.

In 110, a vehicle position in a curvilinear coordinate system at a moment corresponding to a target data frame is predicted according to state information of a historical data frame.

In this embodiment, the historical data frame refers to a data frame that has been collected currently. The target data frame refers to a certain data frame in the future for predicting the vehicle position. According to the predicted vehicle position, a beam may be sent to the vehicle and an echo may be received. Then measurement is performed on the echo to correct the prediction result of the vehicle position. On this basis, the vehicle position in the target data frame may be used for continuing to predict the vehicle position in the next frame. This process is performed circularly to achieve the continuous prediction of the vehicle position and beam tracking.

The historical data frame may be denoted as an $(I - 1)^{th}$ data frame. The state information of the historical data frame may be understood as an estimation result of the state information (including the vehicle position and the vehicle speed) of the vehicle at the moment corresponding to the $(I - 1)^{th}$ data frame and is denoted as $\hat{X}_{I-1}$. The state information of the $(I - 1)^{th}$ data frame may be used for estimating the state information of the vehicle at the moment corresponding to the target data frame (denoted as an $I^{th}$ data frame) to obtain $\hat{X}_{I|I-1}$. The state information of the target data frame includes the vehicle position and the vehicle speed that correspond to the $I^{th}$ data frame. In the prediction of the vehicle position, a state transition model may be pre-constructed. The state transition model is used for describing the relationship between input (that is, $\hat{X}_{I-1}$) and state (that is, $\hat{X}_{I|I-1}$), thereby predicting the vehicle position by using the state information of the historical data frame.

In this embodiment, the vehicle position obtained through prediction refers to the vehicle position in the CCS. The vehicle position in the CCS may be used for constructing a road model with any shape and not limited to the scenario of a rectilinear motion of a vehicle, thereby accurately expressing the vehicle position in any scenario.

In 120, a beamforming vector is determined according to the vehicle position.

Beamforming refers to directing the radiation direction of a beam to a specific direction. In this embodiment, the specific direction is the direction of the communication unit to the predicted vehicle position. The vehicle position in the CCS is converted into the vehicle position in a polar coordinate system to obtain an angular representation of the vehicle position in the polar coordinate system so that the direction of the communication unit to the vehicle position can be clarified, thereby guiding the beamforming.

In 130, a beam is sent based on the beamforming vector, and an echo is received.

In this embodiment, the communication unit may be guided, based on the beamforming vector from the communication unit to the vehicle position, to send the beam to the predicted vehicle position. After the beam reaches (a communication receiver of) the vehicle, the echo is formed. The communication unit receives the echo and acquires a measurement parameter of the target data frame according to the echo.

In 140, state information of the target data frame is determined based on an extended Kalman filtering algorithm and a measurement parameter of the echo. The state information of the target data frame includes the corrected vehicle position.

In this embodiment, the echo is measured to correct the vehicle position obtained through prediction and obtain more accurate state information of the target data frame, facilitating the continuous tracking of the vehicle subsequently. The prediction and correction of the EKF algorithm are both based on nonlinear calculations. A first-order approximation term may be obtained based on linearization of the first-order Taylor series expansion and serve as an approximate expression of the state transition model and an approximate expression of an observation model. Then the state transition model and observation model are iteratively updated to implement optimal estimation and real-time correction of the predicted data. In this embodiment, the EKF algorithm and the measurement parameter of the echo (for example, the angle of arrival, delay and Doppler shift of the echo) may be used for correcting the predicted vehicle position and obtaining the state information $\hat{X}_l$ of the target data frame. $\hat{X}_l$ may serve as the state information of the historical data frame in a new round of prediction and may be used for estimating the state information of the next target data frame (that is, the $(l + 1)^{th}$ data frame), implementing the continuous prediction and tracking of the vehicle.

In this embodiment, the vehicle position in the CCS is used for decomposing the vehicle position and motion trail relative to the road marking, and the information provided by the road shape is fully utilized to implement the modeling in any shape of the road and the beam-based communication vehicle tracking so that the vehicle position can be more effectively estimated and predicted to improve the reliability of beam alignment. Additionally, by using a predictive tracking algorithm, before the $l^{th}$ data frame begins (that is, at the end of the $(l - 1)^{th}$ data frame), the beamforming vector is generated according to the vehicle position obtained through prediction. Data in the $l^{th}$ data frame are sent using the beamforming vector without sending a search pilot to the vehicle. Moreover, the beamforming vector is generated without waiting for the echo of the vehicle, thereby saving pilot overheads and feedback link resources.

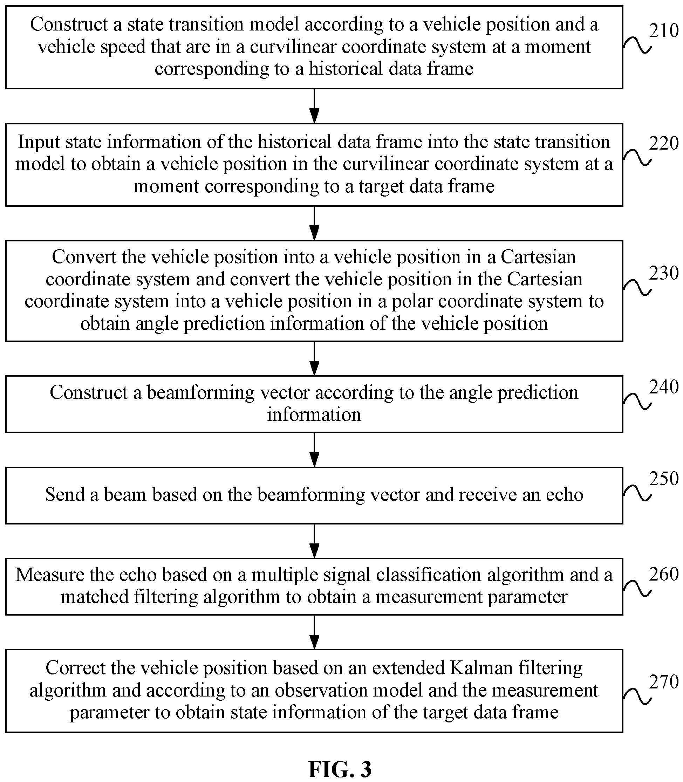

FIG. 3 is a flowchart of a vehicle tracking method according to another embodiment. As shown in FIG. 3, the method includes the steps described below.

In 210, a state transition model is constructed according to a vehicle position and a vehicle speed that are in a curvilinear coordinate system at a moment corresponding to a historical data frame.

In this embodiment, the vehicle position in the curvilinear coordinate system at the moment corresponding to the historical data frame is $(s_{l-1}, n_{l-1}, q_{l-1})$. $q_{l-1}$ denotes the height of the vehicle center point relative to the road surface and is a fixed value. Correspondingly, the vehicle speed in the s-axis direction and the vehicle speed in the n-axis direction are $v_{s,l-1}$ and $v_{n,l-1}$ respectively. An EKF algorithm uses a state transition model to describe the motion state of a tracked vehicle. The tracked vehicle may be considered to perform a uniform rectilinear motion respectively in the s-axis direction of the CCS and the n-axis direction of the CCS. However, due to the fact that the actual motion does not completely conform to the motion state, the state transition model contains system errors. Specifically, the state transition model may be expressed as that

$$X_{l|l-1} = h(X_{l-1})\begin{cases} s_l = s_{l-1} + v_{s,l-1}\Delta T + z_s \\ n_l = n_{l-1} + v_{n,l-1}\Delta T + z_n \\ v_{s,l} = v_{s,l-1} + z_{vs} \\ v_{n,l} = v_{n,l-1} + z_{vn} \end{cases}$$

. $z_s$ and $z_n$ are a system error of the vehicle position coordinate in the s-axis direction and a system error of the vehicle position coordinate in the n-axis direction respectively. $z_{vs}$ and $z_{vn}$ are a system error of the vehicle speed in the s-axis direction and a system error of the vehicle speed in the n-axis direction respectively.

In 220, the state information of the historical data frame is input into the state transition model to obtain the vehicle position in the curvilinear coordinate system at a moment corresponding to a target data frame.

In this embodiment, the state information of the historical data frame includes $s_{l-1}, n_{l-1}, v_{s,l-1}$, and $v_{n,l-1}$. The state information of the historical data frame is input into the state transition model and is combined with the system errors to obtain the state information $\hat{X}_{l|l-1}$ of the target data frame which includes the vehicle position $(s_l, n_l)$ in the curvilinear coordinate system at the moment corresponding to the target data frame. It is to be noted that $q_l$ denotes the height of the vehicle center point relative to the road surface and is equal to $q_{l-1}$. Correspondingly, the state information of the target data frame further includes the vehicle speed $v_s$ in the s-axis direction and the vehicle speed $v_n$ in the n-axis direction at the moment corresponding to the target data frame.

In 230, the vehicle position is converted into a vehicle position in a Cartesian coordinate system, and the vehicle position in the Cartesian coordinate system is converted into a vehicle position in a polar coordinate system to obtain the angle prediction information of the vehicle position.

In this embodiment, the angle prediction information includes an angle coordinate of the vehicle position in the polar coordinate system. Specifically, through coordinate conversion, the vehicle position in the CCS may be converted in the Cartesian coordinate system and then converted in the polar coordinate system to obtain the predicted angle coordinates $(\hat{\theta}_{l|l-1}, \hat{\varphi}_{l|l-1})$ of the vehicle position.

In 240, a beamforming vector is constructed according to the angle prediction information.

In 250, a beam is sent based on the beamforming vector, and an echo is received.

In this embodiment, the predicted angle coordinates $(\hat{\theta}_{l|l-1}, \hat{\varphi}_{l|l-1})$ of the vehicle position are used for constructing the beamforming vector $\mathbf{f}(\hat{\theta}_{l|l-1}, \hat{\varphi}_{l|l-1})$ of a sending end. The beamforming vector is used for sending the ISAC beam to transmit communication data (that is, the target data frame, namely, the $l^{th}$ data frame) and receive the echo of the vehicle.

In 260, the echo is measured based on a multiple signal classification algorithm and a matched filtering algorithm to obtain a measurement parameter.

In this embodiment, an echo signal may be decomposed through the multiple signal classification (MUSIC) algorithm to obtain a signal subspace corresponding to a signal component of the echo and a noise subspace orthogonal to the signal component of the echo. Then the orthogonality of these two subspaces is used for estimating the measurement parameter of the echo. The matched filtering algorithm is equivalent to performing an auto-correlation operation on the echo signal to maximize the signal-to-noise ratio, thereby measuring the echo accurately. The obtained measurement parameters include the angle $(\hat{\theta}_l, \hat{\varphi}_l)$ of arrival of the echo, the delay $\hat{\tau}_l$ of the echo, and the Doppler shift $\hat{\mu}_l$ of the echo.

In 270, based on the extended Kalman filtering algorithm, the vehicle position is corrected according to an observation model and the measurement parameter to obtain the state information of the target data frame.

In this embodiment, the EKF algorithm is used for processing the measurement parameter, and the observation model is used for correcting the vehicle position obtained through prediction. Finally, the state information $\hat{X}_l$ of the target data frame is output and includes the corrected vehicle position. The observation model is used for describing the relationship between a group of observation values that can be actually measured (for example, the angles of arrival $\hat{\theta}_l$ and $\hat{\varphi}_l$, the time delay $\hat{\tau}_l$ and the Doppler shift $\hat{\mu}_l$ that are obtained through measurement) and the system real state unable to be directly measured (for example, the real vehicle position $(s, n)$ and vehicle speed $(v_s, v_n)$ that may be mapped as the real angles of arrival $\theta_l$ and $\varphi_l$, the real delay $d_l/c$, and the real Doppler shift $2\cos(\varphi_l)v_{R,l}/\lambda$). In the process of processing the measurement parameter through EKF, prediction values are corrected through the observation values and the observation model. The observation model may be expressed as

$$Y_l = g(X_l) \begin{cases} \hat{\theta}_l = \theta_l + \omega_\theta \\ \hat{\varphi}_l = \varphi_l + \omega_\varphi \\ \hat{\tau}_l = d_l/c + \omega_\tau \\ \hat{\mu}_l = 2\cos(\varphi_l)v_{R,l}/\lambda + \omega_\mu \end{cases}$$

. $\omega_\theta$ and $\omega_\varphi$ are measurement errors of the angle of arrivals. $\omega_\tau$ is a measurement error of the delay, c is the speed of light. $v_{R,l}$ is the radial speed of the vehicle in the direction of the vehicle and the communication unit. $\lambda$ is the wavelength of a carrier wave. $d_l$ is twice the distance between the vehicle and the communication unit. The vehicle position is corrected according to the observation model and the measurement parameter. The state information $\hat{X}_l$ of the target data frame may serve as the state information of the historical data frame in a new round of prediction and be used for estimating the state information of the next target data frame (that is, the $(l + 1)^{th}$ data frame), implementing the continuous prediction and accurate tracking of the vehicle.

In an embodiment, before the beamforming vector is determined according to the vehicle position, the method further includes the following.

Position information of each reference point in a road marking is acquired.

Several control points are selected from the road marking, and the control points are used for dividing the road marking into a plurality of control point ranges.

For each reference point, interpolation is performed based on a cubic spline interpolation method in a control point range where a respective reference point is located.

Interpolation results corresponding to the reference points are fit to obtain a curve of the road marking, and interpolation parameters are saved.

In this embodiment, the spline interpolation method is used. Interpolation is performed on the road marking by using the known control points to obtain a series of discrete points. The discrete points can smooth the road marking to obtain a smooth curve expression. For spline interpolation, piecewise polynomials are used for interpolation. That is, several control points are selected to divide the road marking into multiple segments and obtain a plurality of control point ranges. In the smoothing process, a function is determined according to every two adjacent data points. Then, functions of various control point ranges are combined into one function which is a smooth curve function. Specifically, the cubic spline interpolation method is used. That is, a cubic function is constructed for each control point range. Moreover, the properties of 0-order continuity, first-order derivative continuity, and second-order derivative continuity are guaranteed at junctions of piecewise functions so that the smooth curve function is obtained.

In this embodiment, the modeling process in the CCS for a road of any shape is as below.

The position information of each reference point in the road marking is acquired by importing map information or analyzing road design drawings. This embodiment does not limit the selection of reference points, such as random selection, equal interval selection, or selection according to the curvature radius of the road marking. The expression of the curve of the road marking can be fit by solving the coordinates of each selected reference point in the Cartesian coordinate system.

Several control points are selected from the road marking. For example, the control points may include a start point of the road marking, a midpoint of the road marking, and/or an end point of the road marking. In another example, the control points may be selected according to the curvature radius of the road marking. The less the curvature radius of the road, the more and the denser the selected control points. Therefore, a more fitting result of the curve is obtained.

According to the coordinates of each reference point in the Cartesian coordinate system, with the adoption of the cubic spline interpolation method, the preceding interpolation parameters may be used to insert a plurality of points in the control point range where each reference point is located. Then smoothing may be performed on the road marking according to the reference points, the control points, and the inserted points, thereby fitting the curve of the road marking. The expression is as below.

$$x_s = a_{i,3}r^3 + a_{i,2}r^2 + a_{i,1}r^1 + a_{i,0}$$

$$y_s = b_{i,3}r^3 + b_{i,2}r^2 + b_{i,1}r^1 + b_{i,0}$$

$$s = c_{i,3}r^3 + c_{i,2}r^2 + c_{i,1}r^1 + c_{i,0}$$

$(x_s, y_s)$ is the position of any reference point on the road marking in the Cartesian coordinate system. i denotes an $i^{th}$ control point range (between an $i^{th}$ control point and an $(i + 1)^{th}$ control point) where the respective reference point is located. $s$ denotes the length of a curve between a start point (that is, the $i^{th}$ control point) of the control point range and the respective reference point in the direction of the road marking. $a_{i,k}$, $b_{i,k}$, and $c_{i,k}$ ($k = 1, 2, 3$) are each an interpolation parameter of the cubic spline interpolation in the $i^{th}$ control point range.

In an embodiment, the step in which the vehicle position is converted into the vehicle position in the Cartesian coordinate system and in which the vehicle position in the Cartesian coordinate system is converted into the vehicle position in the polar coordinate system includes the following.

A control point range where the vehicle position is located is determined.

An independent variable of an interpolation equation is determined according to the control point range where the vehicle position is located, the length of a corresponding curve between a start point of the control point range and a projection of the vehicle position on the road marking, and the interpolation parameters.

A road direction angle and a projection position of the vehicle on the road marking in the Cartesian coordinate system are determined according to the independent variable of the interpolation equation and the interpolation parameters.

The vehicle position in the Cartesian coordinate system is determined according to the projection position and the road direction angle.

The vehicle position in the Cartesian coordinate system is converted into the vehicle position in the polar coordinate system according to a positional relationship between a polar coordinate center and the curve of the road marking.

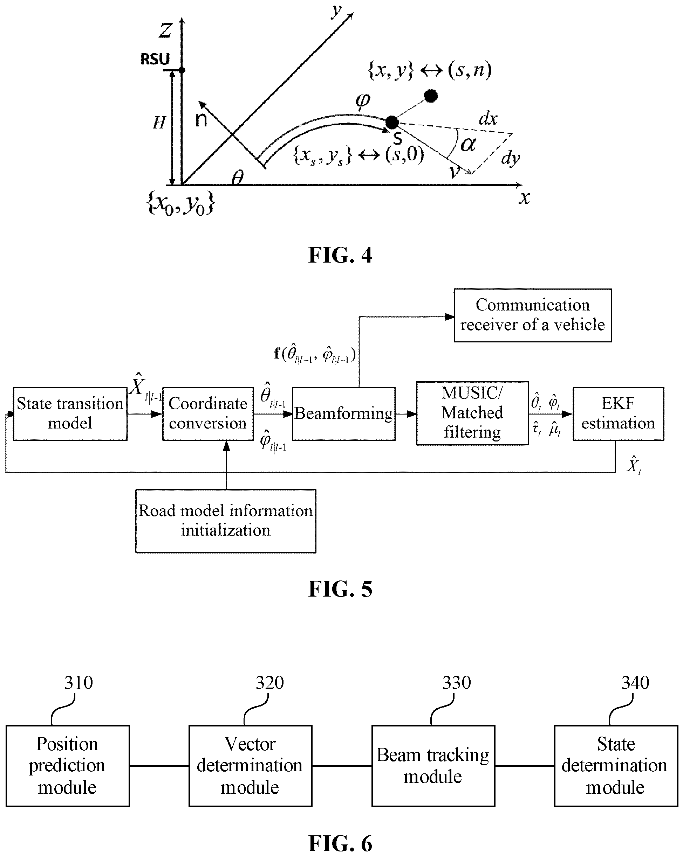

FIG. 4 is a diagram of a coordinate conversion according to an embodiment. As shown in FIG. 4, for the predicted vehicle position, the conversion from the representation $(s, n)$ in the CCS to the representation $(x, y)$ in the Cartesian coordinate system may be implemented through the following.

 1. The control point range of the cubic spline interpolation where the vehicle position is located on the road marking is determined (that is, i is determined).

 2. The independent variable r of the interpolation equation is solved according to that $s = c_{i,3}r^3 + c_{i,2}r^2 + c_{i,1}r^1 + c_{i,0}$.

 3. The solved r is substituted into that $x_s = a_{i,3}r^3 + a_{i,2}r^2 + a_{i,1}r^1 + a_{i,0}$ and that $y_s = b_{i,3}r^3 + b_{i,2}r^2 + b_{i,1}r^1 + b_{i,0}$ to obtain the projection position $(x_s, y_s)$ of the vehicle position on the road marking.

 4. The solved r is substituted into that

$$\alpha = \arctan\left(\frac{a_{i,2}r^2 + a_{i,1}r^1 + a_{i,0}}{b_{i,2}r^2 + b_{i,1}r^1 + b_{i,0}}\right)$$

to solve the road direction angle $a$.

 5. The vehicle position $(x, y)$ in the Cartesian coordinate system is solved according to that $x = x_s - n\sin\alpha$ and $y = y_s + n\cos\alpha$.

In this embodiment, the projection $(s, 0)$ of $(s, n)$ in the s-axis direction in the CCS is integral with $\{x_s, y_s\}$. The projection relationship depends on the existence of the road direction angle $a$. Since the n-axis direction is always perpendicular to the direction of $a$, the vehicle position in the Cartesian coordinate system can be obtained according to the value of n, the direction of a, and the position of $(s, 0)$.

On this basis, the vehicle position $(x, y)$ in the Cartesian coordinate system is converted into the angle

coordinates $(\hat{\theta}_{l|l-1}, \hat{\varphi}_{l|l-1})$ of the vehicle position in the polar coordinate system according to the positional relationship between the polar coordinate center and the curve of the road marking so as to construct the beamforming vector. In FIG. 4, the polar coordinate system is centered on the communication unit $\{x_0, y_0\}$. $\theta$ is an included angle (which may be understood as an azimuth angle) between the connection line of the communication unit and the vehicle projected on the ground and the x-axis. $\varphi$ is an included angle (which may be understood as a pitch angle) between the connection line of the communication unit and the vehicle and the xoy plane (that is, the ground plane). a is an angle of the direction of the road marking of the current vehicle position relative to the x-axis.

FIG. 5 is a diagram illustrating a beam-based vehicle tracking process according to an embodiment. As shown in FIG. 5, an object of road model information initialization is to establish the correlation between the Cartesian coordinate system, the CCS, and the polar coordinate system. With the adoption of the state transition model, the state information $\hat{X}_{l|l-1}$ of the vehicle at the moment corresponding to the target data frame may be predicted according to the state information of the historical data frame $\hat{X}_{l-1}$. $\hat{X}_{l|l-1}$ includes the state information such as the vehicle position and the vehicle speed that correspond to the $l^{th}$ data frame. The vehicle position may be used for determining the beamforming vector. Specifically, the vehicle position in the CCS is converted into the vehicle position in the Cartesian coordinate system. Then the vehicle position in the Cartesian coordinate system is converted into the vehicle position in the polar coordinate system. In this case, the angle representation of the vehicle position in the polar coordinate system is obtained. The beamforming vector is constructed accordingly so that the beam is sent to the vehicle. After the beam reaches the communication receiver of the vehicle, the echo may be generated. Then the echo is measured through the MUSIC and the matched filtering algorithm. The vehicle position may be corrected based on the EKF and the measured parameter to obtain accurate $\hat{X}_l$ for predicting and tracking the next target data frame.

For the vehicle tracking method in this embodiment, the vehicle position and the motion trail relative to the road marking are decomposed to implement the construction of the state transition model in any shape of the road and the tracking of the sensing-assisted communication vehicle tracking based on the state transition model. Moreover, the predictive tracking algorithm is used for estimating the state information of the vehicle based on the extended Kalman filtering algorithm and the measurement parameter of the echo, replacing the solution of using a pilot for channel estimation and using uplink feedback to acquire the channel state, thereby saving pilot overheads and feedback link resources. Additionally, the vehicle azimuth angle is diversified and varies rapidly for a scenario of any road shape or any vehicle speed. The ISAC method is used to effectively improve the accuracy of vehicle position tracking and greatly improve the communication stability in high mobile environment. Moreover, the beam is used for estimating the angle, the position, and the Doppler shift without introducing an additional radar sensor, which has the advantage of low cost.

Embodiments of the present application further provide a vehicle tracking apparatus. FIG. 6 is a structural diagram of a vehicle tracking apparatus according to an embodiment. As shown in FIG. 6, the vehicle tracking apparatus includes a position prediction module 310, a vector determination module 320, a vehicle tracking module 330, and a state determination module 340.

The position prediction module 310 is configured to predict, according to the state information of a historical data frame, a vehicle position in a curvilinear coordinate system at a moment corresponding to a target data frame.

The vector determination module 320 is configured to determine a beamforming vector according to the vehicle position.

The vehicle tracking module 330 is configured to send a beam based on the beamforming vector and receive an echo.

The state determination module 340 is configured to determine the state information of the target data frame based on an extended Kalman filtering algorithm and a measurement parameter of the echo. The state information of the target data frame includes the corrected vehicle position.

For the vehicle tracking apparatus in this embodiment, the vehicle position in the CCS is used for decomposing the vehicle position and motion trail relative to the road marking, and the information provided by the road shape is fully utilized to implement the modeling in any shape of the road and the beam-based communication vehicle tracking so that the vehicle position can be more effectively estimated and predicted to improve the reliability of beam alignment. Additionally, by using a predictive tracking algorithm, before the target data frame begins, the beamforming vector is generated according to the vehicle position obtained through prediction. Data in the target data frame are sent using the beamforming vector, thereby saving pilot overheads and feedback link resources.

In an embodiment, the position prediction module 310 includes a construction unit and a prediction unit.

The construction unit is configured to construct a state transition model according to a vehicle position and a vehicle speed that are in the curvilinear coordinate system at a moment corresponding to the historical data frame.

The prediction unit is configured to input the state information of the historical data frame into the state transition model to obtain the vehicle position.

In an embodiment, the vector determination module 320 includes a coordinate conversion unit and a vector determination unit.

The coordinate conversion unit is configured to convert the vehicle position into a vehicle position in a Cartesian coordinate system and then convert the vehicle position in the Cartesian coordinate system into a vehicle position in a polar coordinate system to obtain the angle prediction information of the vehicle position. The angle prediction information includes an angle coordinate of the vehicle position in the polar coordinate system.

The vector determination unit is configured to construct a beamforming vector according to the angle prediction information.

In an embodiment, the apparatus further includes an acquisition module, a selection module, an interpolation module, and a fitting module.

The acquisition module is configured to acquire position information of each reference point in a road marking before the beamforming vector is determined according to the vehicle position.

The selection module is configured to select several control points from the road marking, and the control points are used for dividing the road marking into a plurality of control point ranges.

The interpolation module is configured to, for each reference point, perform, based on a cubic spline interpolation method, interpolation in a control point range where each reference point is located.

The fitting module is configured to fit interpolation results corresponding to the reference points to obtain a curve of the road marking and save interpolation parameters.

In an embodiment, the coordinate conversion unit is configured to perform the following.

A control point range where the vehicle position is located is determined.

An independent variable of an interpolation equation is determined according to the control point range where the vehicle position is located, the length of a corresponding curve between a start point of the control point range and a projection of the vehicle position on the road marking, and the interpolation parameters.

A road direction angle and a projection position of a vehicle on the road marking in the Cartesian coordinate system are determined according to the independent variable of the interpolation equation and the interpolation parameters.

The vehicle position in the Cartesian coordinate system is determined according to the projection position and the road direction angle.

The vehicle position in the Cartesian coordinate system is converted into the vehicle position in the polar coordinate system according to a positional relationship between a polar coordinate center and the curve of the road marking.

In an embodiment, the apparatus further includes a measurement module.

The measurement module is configured to measure the echo based on a multiple signal classification algorithm and a matched filtering algorithm to obtain the measurement parameter. The measurement parameter includes an angle of arrival, a delay, and a Doppler shift.

In an embodiment, the state determination module 340 is configured to perform the following.

The vehicle position is corrected based on the extended Kalman filtering algorithm and according to an observation model and the measurement parameters to obtain the state information of the target data frame.

The vehicle tracking apparatus provided in this embodiment and the vehicle tracking method provided in the preceding embodiments belong to the same inventive concept. For technical details not described in detail in this embodiment, reference may be made to any one of the preceding embodiments, and this embodiment has the same beneficial effects as the vehicle tracking method performed.

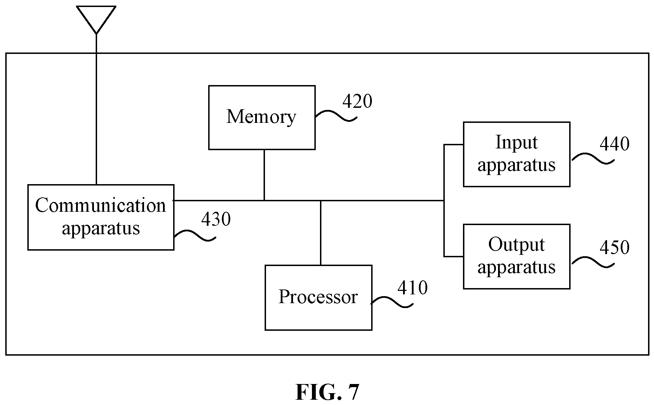

Embodiments of the present application further provide a communication unit. FIG. 7 is a diagram illustrating the hardware structure of a communication unit according to an embodiment. As shown in FIG. 7, the communication unit provided in the present application includes a processor 410 and a memory 420. One or more processors 410 may be provided in the communication unit. In FIG. 7, one processor 410 is used as an example. The memory 420 is configured to store one or more programs. The one or more programs are executed by the one or more processors 410 to cause the one or more processors 410 to perform the vehicle tracking method provided in embodiments of the present application.

The communication unit further includes a communication apparatus 430, an input apparatus 440, and an output apparatus 450.

The processor 410, the memory 420, the communication apparatus 430, the input apparatus 440, and the output apparatus 55 in the communication unit may be connected through a bus or in other manners, and the connection through the bus is used as an example in FIG. 7.

The input apparatus 440 may be configured to receive input digital or character information and generate key signal input related to user settings and function control of the communication unit. The output apparatus 450 may include a display device such as a display screen.

The communication apparatus 430 may include a receiver and a sender. The communication apparatus 430 is configured to perform information transceiving communication under the control of the processor 410.

As a computer-readable storage medium, the memory 420 may be configured to store software programs, computer-executable programs and modules, such as program instructions/modules (for example, a position prediction module 310, a vector determination module 320, a vehicle tracking module 330 and a state determination module 340 in the vehicle tracking apparatus) corresponding to the vehicle tracking method in embodiments of the present application. The memory 420 may include a program storage region and a data storage region, where the program storage region may store an operating system and an application program required by at least one function, and the data storage region may store data created according to the use of the communication unit. Additionally, the memory 420 may include a high-speed random-access memory and may also include a nonvolatile memory, such as at least one magnetic disk memory, a flash memory, or another nonvolatile solid-state memory. In some examples, the memory 420 may further include memories located remotely relative to the processor 410, and these remote memories may be connected to the communication unit via a network. Examples of the preceding network include, but are not limited to, the Internet, an intranet, a local area network, a mobile communication network, and a combination thereof.

Embodiments of the present application further provide a storage medium for storing a computer program. When the computer program is executed by a processor, the vehicle tracking method according to any embodiment of the present application is performed. The method includes the following.

A vehicle position in a curvilinear coordinate system at a moment corresponding to a target data frame is predicted according to the state information of a historical data frame.

A beamforming vector is determined according to the vehicle position.

A beam is sent based on the beamforming vector, and an echo is received.

The state information of the target data frame is determined based on an extended Kalman filtering algorithm and a measurement parameter of the echo, and the state information of the target data frame includes a corrected vehicle position.

A computer storage medium in embodiments of the present application may be one computer-readable medium or any combination of multiple computer-readable media. The computer-readable medium may be a computer-readable signal medium or a computer-readable storage medium. For example, the computer-readable storage medium may be, but is not limited to, an electrical, magnetic, optical, electromagnetic, infrared, or semiconductor system, apparatus, or device or any combination thereof. More specific examples of the computer-readable storage medium include (non-exhaustive list): an electrical connection having one or more wires, a portable computer magnetic disk, a hard disk, a random-access memory (RAM), a read-only memory (ROM), an erasable programmable read-only memory (EPROM), a flash memory, an optical fiber, a portable compact disc ROM (CD-ROM), an optical memory, a magnetic memory, or any suitable combination thereof. The computer-readable storage medium may be any tangible medium including or storing a program. The program may be used by or used in conjunction with an instruction execution system, apparatus, or device.

The computer-readable signal medium may include a data signal propagated in a baseband or as part of a carrier. The data signal carries computer-readable program codes. The data signal propagated in this manner may be in multiple forms, including, but not limited to, an electromagnetic signal, an optical signal, or any suitable combination thereof. The computer-readable signal medium may also be any computer-readable medium other than the computer-readable storage medium. The computer-readable medium may send, propagate, or transmit a program used by or used in conjunction with an instruction execution system, apparatus, or device.

The program codes included in the computer-readable medium may be transmitted in any suitable medium including, but not limited to, a wireless medium, a wire, an optical cable, radio frequency (RF), or any suitable combination thereof.

Computer program codes for performing the operations of the present application may be written in one or more programming languages or a combination thereof. The programming languages include object-oriented programming languages such as Java, Smalltalk, and C++ and may further include conventional procedural programming languages such as "C" or similar programming languages. The program codes may be executed entirely on a user computer, executed partly on a user computer, executed as a stand-alone software package, executed partly on a user computer and partly on a remote computer, or executed entirely on a remote computer or a server. In the case where the remote computer is involved, the remote computer may be connected to the user computer through any type of network including a local area network (LAN) or a wide area network (WAN) or may be connected to an external computer (for example, via the Internet provided by an Internet service provider).

The preceding are example embodiments of the present application and are not intended to limit the scope of the present application.

It is to be understood by those skilled in the art that the term "user equipment" encompasses any suitable type of radio user device, for example, a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM) and an optical memory device and system (a digital video disc (DVD) or a compact disc (CD)). The computer-readable medium may include a non-transitory storage medium. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FGPA), and a processor based on a multi-core processor architecture.

The detailed description of example embodiments of the present application is provided above through exemplary and non-restrictive examples. However, considering the drawings and the claims, various modifications and adjustments to the preceding embodiments are apparent to those skilled in the art and do not deviate from the scope of the present application. Accordingly, the proper scope of the present application is determined according to the claims.

## Claims

1. A vehicle tracking method, comprising:

   predicting, according to state information of a historical data frame, a vehicle position in a curvilinear coordinate system at a moment corresponding to a target data frame;
   determining a beamforming vector according to the vehicle position;
   sending a beam based on the beamforming vector and receiving an echo; and
   determining state information of the target data frame based on an extended Kalman filtering algorithm and a measurement parameter of the echo, wherein the state information of the target data frame comprises a corrected vehicle position.

2. The method according to claim 1, wherein predicting, according to the state information of the historical data frame, the vehicle position in the curvilinear coordinate system at the moment corresponding to the target data frame comprises:

   constructing a state transition model according to a vehicle position and a vehicle speed that are in the curvilinear coordinate system at a moment corresponding to the historical data frame; and inputting the state information of the historical data frame into the state transition model to obtain the vehicle position in the curvilinear coordinate system at the moment corresponding to the target data frame.

3. The method according to claim 1, wherein determining the beamforming vector according to the vehicle position comprises:

   converting the vehicle position into a vehicle position in a Cartesian coordinate system and converting the vehicle position in the Cartesian coordinate system into a vehicle position in a polar coordinate system to obtain angle prediction information of the vehicle position, wherein the angle prediction information comprises an angle coordinate of the vehicle position in the polar coordinate system; and constructing the beamforming vector according to the angle prediction information.

4. The method according to claim 3, before determining the beamforming vector according to the vehicle position, further comprising:

   acquiring position information of each reference point among a plurality of reference points in a road marking;
   selecting a plurality of control points from the road marking, wherein the plurality of control points are used for dividing the road marking into a plurality of control point ranges;
   for each reference point among the plurality of reference points, performing, based on a cubic spline interpolation method, interpolation in a control point range where a respective reference point is located; and
   fitting interpolation results corresponding to the plurality of reference points to obtain a curve of the road marking, and saving interpolation parameters.

5. The method according to claim 4, wherein converting the vehicle position into the vehicle position in the Cartesian coordinate system and converting the vehicle position in the Cartesian coordinate system into the vehicle position in the polar coordinate system comprises:

determining a control point range where the vehicle position is located;

determining an independent variable of an interpolation equation according to the control point range where the vehicle position is located, a length of a corresponding curve between a start point of the control point range and a projection of the vehicle position on the road marking, and the interpolation parameters;

determining, according to the independent variable of the interpolation equation and the interpolation parameters, a road direction angle and a projection position of a vehicle on the road marking in the Cartesian coordinate system;

determining the vehicle position in the Cartesian coordinate system according to the projection position and the road direction angle; and

converting the vehicle position in the Cartesian coordinate system into the vehicle position in the polar coordinate system according to a positional relationship between a polar coordinate center and the curve of the road marking.

6. The method according to claim 1, after receiving the echo, further comprising:
measuring the echo based on a multiple signal classification algorithm and a matched filtering algorithm to obtain the measurement parameter, wherein the measurement parameter comprises an angle of arrival, a delay, and a Doppler shift.

7. The method according to claim 1, wherein determining the state information of the target data frame based on the extended Kalman filtering algorithm and the measurement parameter of the echo comprises:
correcting, according to an observation model and the measurement parameter, the vehicle position based on the extended Kalman filtering algorithm to obtain the state information of the target data frame.

8. A vehicle tracking apparatus, comprising:

a position prediction module configured to predict, according to state information of a historical data frame, a vehicle position in a curvilinear coordinate system at a moment corresponding to a target data frame;

a vector determination module configured to determine a beamforming vector according to the vehicle position;

a beam transceiver module configured to send a beam based on the beamforming vector and receive an echo; and

a state estimation module configured to determine state information of the target data frame based on an extended Kalman filtering algorithm and a measurement parameter of the echo, wherein the state information of the target data frame comprises the corrected vehicle position.

9. A communication unit, comprising a memory and at least one processor, wherein

the memory is configured to store at least one program; and

when executed by the at least one processor, the at least one program causes the at least one processor to perform the vehicle tracking method according to any one of claims 1 to 7.

10. A computer-readable storage medium for storing a computer program, wherein when the computer program is executed by a processor, the vehicle tracking method according to any one of claims 1 to 7 is performed.

**FIG. 1**

| | |
|---|---|
| Predict, according to state information of a historical data frame , a vehicle position in a curvilinear coordinate system at a moment corresponding to a target data frame | 110 |
| ↓ | |
| Determine a beamforming vector according to the vehicle position | 120 |
| ↓ | |
| Send a beam based on the beamforming vector and receive an echo | 130 |
| ↓ | |
| Determine state information of the target data frame based on an extended Kalman filtering algorithm and a measurement parameter of the echo, where the state information of the target data frame includes a corrected vehicle position | 140 |

**FIG. 2**

Construct a state transition model according to a vehicle position and a vehicle speed that are in a curvilinear coordinate system at a moment corresponding to a historical data frame ~210

Input state information of the historical data frame into the state transition model to obtain a vehicle position in the curvilinear coordinate system at a moment corresponding to a target data frame ~220

Convert the vehicle position into a vehicle position in a Cartesian coordinate system and convert the vehicle position in the Cartesian coordinate system into a vehicle position in a polar coordinate system to obtain angle prediction information of the vehicle position ~230

Construct a beamforming vector according to the angle prediction information ~240

Send a beam based on the beamforming vector and receive an echo ~250

Measure the echo based on a multiple signal classification algorithm and a matched filtering algorithm to obtain a measurement parameter ~260

Correct the vehicle position based on an extended Kalman filtering algorithm and according to an observation model and the measurement parameter to obtain state information of the target data frame ~270

**FIG. 3**

**FIG. 4**

**FIG. 5**

**FIG. 6**

**FIG. 7**

## INTERNATIONAL SEARCH REPORT

International application No.

**PCT/CN2023/099778**

### A. CLASSIFICATION OF SUBJECT MATTER

H04W 4/029(2018.01)i; G05D1/00(2006.01)i

According to International Patent Classification (IPC) or to both national classification and IPC

### B. FIELDS SEARCHED

Minimum documentation searched (classification system followed by classification symbols)

IPC: H04W G05D G01S

Documentation searched other than minimum documentation to the extent that such documents are included in the fields searched

Electronic data base consulted during the international search (name of data base and, where practicable, search terms used)

CNTXT, ENTXTC: 波束, 车辆, 定位, 发射, 发送, 感知一体化, 跟踪, 接收, 卡尔曼, 曲线坐标, 位置, 预测, ISAC, Integrated Sensing And Communication, CCS, Curvilinear Coordinate, EKF, Kalman Filtering, track+, positon, loca+, beam, frame, predic +, sens+

### C. DOCUMENTS CONSIDERED TO BE RELEVANT

| Category* | Citation of document, with indication, where appropriate, of the relevant passages | Relevant to claim No. |
|---|---|---|
| X | US 2022128995 A1 (WAYMO LLC) 28 April 2022 (2022-04-28)<br>description, paragraphs 18-87 | 1-10 |
| X | US 11002859 B1 (TSINGHUA UNIVERSITY) 11 May 2021 (2021-05-11)<br>description, paragraphs 105-197 | 1-10 |
| A | CN 112363167 A (CHONGQING UNIVERSITY OF POSTS AND TELECOMMUNICATIONS) 12 February 2021 (2021-02-12)<br>entire document | 1-10 |
| A | CN 112384760 A (MOBILEYE VISION TECHNOLOGIES LTD.) 19 February 2021 (2021-02-19)<br>entire document | 1-10 |
| A | US 2021380140 A1 (TOYOTA RESEARCH INSTITUTE, INC.) 09 December 2021 (2021-12-09)<br>entire document | 1-10 |
| A | US 2021389770 A1 (ARGO AI, LLC) 16 December 2021 (2021-12-16)<br>entire document | 1-10 |

☐ Further documents are listed in the continuation of Box C. ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **28 August 2023** | **04 September 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

<div align="center">

**INTERNATIONAL SEARCH REPORT**
**Information on patent family members**

</div>

International application No.

**PCT/CN2023/099778**

| Patent document cited in search report | | | Publication date (day/month/year) | Patent family member(s) | | | Publication date (day/month/year) |
|---|---|---|---|---|---|---|---|
| US | 2022128995 | A1 | 28 April 2022 | WO | 2022087308 | A1 | 28 April 2022 |
| | | | | EP | 4204856 | A1 | 05 July 2023 |
| US | 11002859 | B1 | 11 May 2021 | CN | 111272165 | A | 12 June 2020 |
| CN | 112363167 | A | 12 February 2021 | | None | | |
| CN | 112384760 | A | 19 February 2021 | EP | 3784989 | A1 | 03 March 2021 |
| | | | | WO | 2019222358 | A1 | 21 November 2019 |
| | | | | US | 2021061305 | A1 | 04 March 2021 |
| | | | | US | 2021061304 | A1 | 04 March 2021 |
| | | | | US | 2021103287 | A1 | 08 April 2021 |
| | | | | US | 2023202515 | A1 | 29 June 2023 |
| | | | | US | 2021245780 | A1 | 12 August 2021 |
| | | | | US | 2021072757 | A1 | 11 March 2021 |
| | | | | US | 2021316751 | A1 | 14 October 2021 |
| | | | | EP | 3865822 | A1 | 18 August 2021 |
| | | | | US | 2021064057 | A1 | 04 March 2021 |
| | | | | US | 2021088355 | A1 | 25 March 2021 |
| | | | | US | 2021064056 | A1 | 04 March 2021 |
| US | 2021380140 | A1 | 09 December 2021 | | None | | |
| US | 2021389770 | A1 | 16 December 2021 | EP | 4165376 | A2 | 19 April 2023 |
| | | | | WO | 2021257423 | A2 | 23 December 2021 |
| | | | | CN | 115698637 | A | 03 February 2023 |

Form PCT/ISA/210 (patent family annex) (July 2022)